# DEMANDE DE BREVET EUROPEEN

(11) **EP 3 379 112 A1**
(43) Date de publication de la demande: **26.09.2018**
(21) Numéro de dépôt: 18156853.6
(22) Date de dépôt: 15.02.2018
(51) Int. Cl.: F16H 63/30, F16H 61/24

(54) **BOITE DE VITESSES POUR VEHICULE AUTOMOBILE COMPRENANT UNE FOURCHETTE DEPLACEE PAR UN BASCULEUR**

(30) Priorité: 24.03.2017 FR 1752475
(71) Demandeur: PSA Automobiles SA, 78300 Poissy (FR)
(72) Inventeur: PLOE, PIERRE, 92800 PUTEAUX (FR)

(57) **Abrégé**

L'invention a pour objet une boîte vitesses pour véhicule automobile comprenant une fourchette (20) déplacée par un basculeur (24) pivotant dans une direction entre deux positions d'extrémités pour engager un rapport de cette boîte, et un ressort (36) agissant sur ce basculeur (24) qui est successivement comprimé puis détendu en passant d'une position d'extrémité à l'autre, caractérisée en ce qu'elle comporte un bras oscillant (30) comprenant des liaisons avec le basculeur (24) et un carter (40) de la boîte de vitesses assurant à ce bras oscillant (30) un pivotement dans la direction opposée à celle du basculeur (24), le ressort (36) étant relié au basculeur (24) et au bras oscillant (30) en deux points décrivant une course dans des directions opposées.

## Description

La présente invention concerne une boîte de vitesses pour un véhicule automobile, ainsi qu'un véhicule automobile équipé d'une telle boîte de vitesses.

Les boîtes de vitesses du type à commande manuelle pour les véhicules automobiles comportent généralement deux arbres parallèles supportant des couples de pignons réalisant différentes rapports de vitesses, pour transmettre le mouvement du moteur thermique aux roues motrices suivant plusieurs rapports de marche avant.

Un arbre supplémentaire portant des pignons intercalés entre des pignons des arbres parallèles, permet de réaliser une inversion du sens de marche donnant un rapport de marche arrière.

Des manchons coulissants axialement, interposés entre des pignons libres portés par les arbres parallèles, réalisent en coulissant vers un pignon libre une synchronisation puis un crabotage de ce pignon sur son arbre afin d'engager un rapport de vitesse.

Un type de commande des manchons coulissants connu, présenté notamment par le document EP-A2-0790443, comporte pour chaque manchon une fourchette de commande engagée dans une rainure circulaire de ce manchon, qui est guidée par un axe parallèle aux arbres.

Un arbre de commande entraîné en rotation et en translation par un levier de commande de vitesse manoeuvré par le conducteur, réalise successivement un mouvement de sélection pour sélectionner une fourchette, puis un mouvement de passage pour déplacer le manchon lié à cette fourchette.

D'une manière générale il est connu d'utiliser des systèmes de billage comprenant chacun une bille de positionnement poussée par un ressort dans des creux, pour maintenir les fourchettes dans leurs positions de point mort et d'engagement des rapports. Toutefois ces types de billage assurent peu ou pas d'aide ergonomique pour le déplacement du manchon, comportant la délivrance d'un effort aidant le mouvement de synchronisation et d'engagement du rapport.

En complément la bille de positionnement peut être montée sur des petites billes formant un roulement à billes, qui réduisent les frottements en améliorant l'aide ergonomique. Toutefois ce système est complexe à réaliser, et nécessite une course plus importante avec une came plus longue comprenant des pentes adaptées.

Pour les mouvements comprenant seulement deux positions stables d'extrémité, notamment pour un passage de la marche arrière, un système de positionnement connu comporte un ressort à genouillère agissant sur un basculeur de passage, qui se comprime en quittant une position puis se détend en approchant vers l'autre position pour la maintenir. De cette manière le ressort maintient chaque position d'extrémité, et délivre une aide ergonomique en se détendant pour aider l'engagement du rapport.

Toutefois les courses réduites des basculeurs pour certains passages de rapports ne permettent pas au ressort à genouillère de délivrer une aide ergonomique efficace.

La présente invention a notamment pour but d'éviter ces problèmes de l'art antérieur.

Elle propose à cet effet une boîte vitesses pour véhicule automobile comprenant une fourchette déplacée par un basculeur pivotant dans une direction entre deux positions d'extrémités pour engager un rapport de cette boîte, et un ressort à genouillère agissant sur ce basculeur qui est successivement comprimé puis détendu en passant d'une position d'extrémité à l'autre, cette boîte de vitesses étant remarquable en ce qu'elle comporte un bras oscillant comprenant des liaisons avec le basculeur et un carter de la boîte de vitesses assurant à ce bras oscillant un pivotement dans la direction opposée à celle du basculeur, le ressort étant relié au basculeur et au bras oscillant en deux points décrivant une course dans des directions opposées.

Un avantage de cette boîte de vitesses est que de manière simple, en conservant le basculeur de passage, par l'ajout du bras oscillant lié à ce basculeur inversant sa direction de pivotement, le ressort peut agir plus efficacement sur ce basculeur grâce à un débattement plus important. On obtient un effort de détente du ressort présentant une aide ergonomique efficace pour l'engagement d'un rapport.

La boîte de vitesses selon l'invention peut de plus comporter une ou plusieurs des caractéristiques suivantes, qui peuvent être combinées entre elles.

Avantageusement, le bras oscillant est lié au basculeur et au carter par deux axes parallèles.

Dans ce cas, la boîte de vitesses peut comporter successivement dans la direction d'un même axe transversal, un pivot du basculeur, un axe d'oscillation du bras oscillant fixé à ce basculeur, et un axe de réaction fixé au carter et ajusté dans un perçage du bras oscillant.

De plus la boîte de vitesses peut comporter successivement dans la direction de l'axe transversal, une première extrémité du ressort fixée à l'extrémité du bras oscillant opposée à l'axe d'oscillation, puis la deuxième extrémité de ce ressort.

Avantageusement, le bras oscillant comporte une tôle posée à plat sur le basculeur.

Dans ce cas, le carter peut comporter une forme couvrant à la fois le basculeur et le bras oscillant, supportant le pivot et l'axe de réaction.

Avantageusement, le ressort comporte plusieurs spires jointives se terminant pas des extrémités orientées tangentiellement.

En particulier, le déplacement du basculeur peut entraîner un rapprochement des extrémités du ressort l'une de l'autre puis un écartement de ces extrémités.

L'invention a aussi pour objet un véhicule automobile équipé d'une boîte de vitesses comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente un système de commande d'une boîte de vitesses selon l'invention ;
- la figure 2 présente le basculeur de marche arrière de cette boîte dans une position de point mort ; et
- la figure 3 présente ce basculeur lors de l'engagement de la marche arrière.

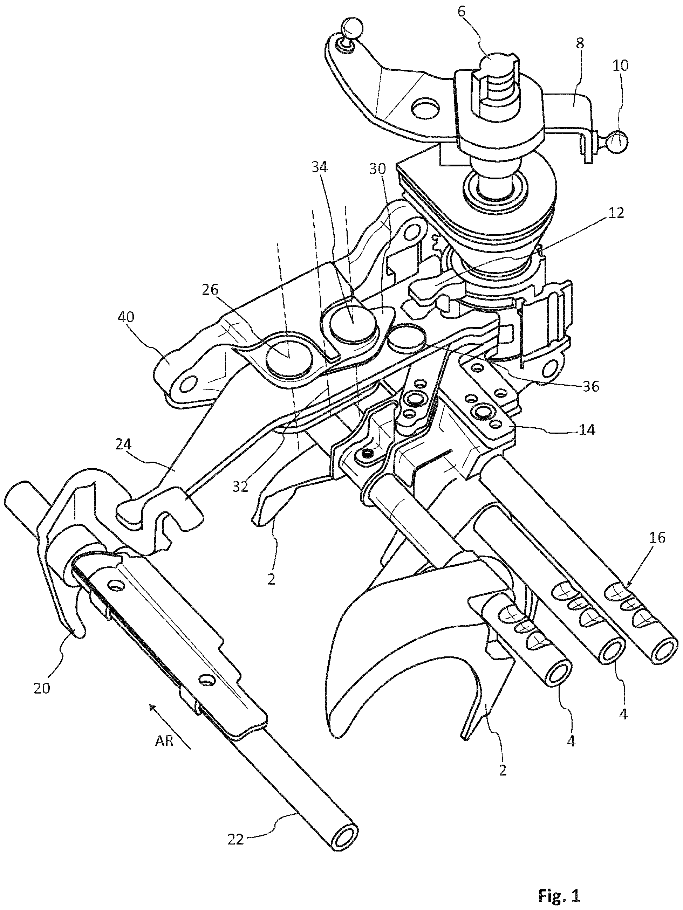

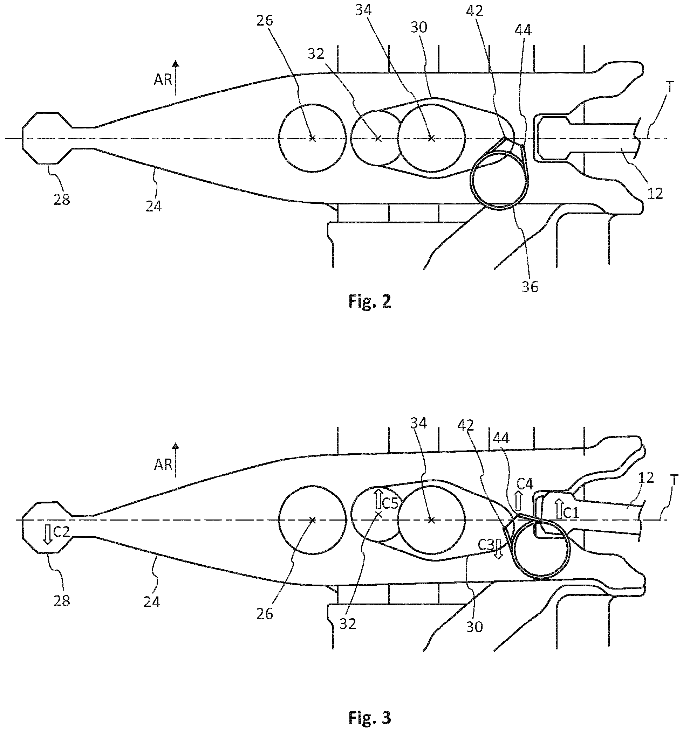

Les figures 1 et 2 présentent des fourchettes 2 de passage des rapports de marche avant, fixées sur des axes longitudinaux 4 guidés dans le carter de la boîte de vitesses 40, comprenant des creux 16 recevant un bille de systèmes de billage pour fixer leurs positions de fonctionnement.

Un arbre de commande 6 disposé dans une position appelée par convention verticale, comporte sur le dessus deux biellettes 8 comprenant chacune à leur extrémité une rotule 10.

Un levier de sélection non représenté, actionné par le levier de changement de vitesse manoeuvré par le conducteur, agit dans une gorge circulaire de l'arbre de commande 6 pour effectuer un coulissement axial de sélection de cet arbre. Une des rotules 10 applique à l'arbre de commande 6 une rotation effectuant un passage des rapports. L'autre rotule 10 entraine une masse d'inertie externe à la boite de vitesses.

La sélection se fait par le déplacement vertical d'un doigt de passage 12 s'ajustant dans un creux d'une plaque 14 liée à un axe longitudinal 4, le passage par une rotation de ce doigt entraînant l'axe sélectionné.

Un basculeur 24 disposé dans une direction transversale, est formé par une tôle découpée comportant dans une partie centrale un pivot vertical 26 lié au carter 40. Le basculeur 24 présente à une extrémité présentée à droite sur les figures, un creux recevant le doigt de passage 12, et à l'autre extrémité un bossage le reliant à une fourchette de marche arrière 20 guidée par un axe longitudinal de marche arrière 22.

Le basculeur 24 inverse le mouvement du doigt de passage 12 pour réaliser deux positions d'extrémité de la fourchette de marche arrière 20, comprenant d'un côté appelé par convention côté arrière, indiqué par la flèche « AR », une position de point mort, et de l'autre l'engagement du rapport de marche arrière.

Un bras oscillant 30 formé par une tôle posée à plat sur le basculeur 24, comporte un axe vertical d'oscillation 32 fixé à ce basculeur, qui est disposé sur l'axe transversal T reliant le pivot de basculeur 26 à l'arbre de commande 6, vers la droite à une petite distance de ce pivot.

Un axe de réaction 34 fixé verticalement au carter de la boîte de vitesses 40 au-dessus du basculeur 24, est ajusté dans un perçage central du bras oscillant 30 disposé sur l'axe transversal T, vers la droite à une petite distance A de l'axe d'oscillation 32.

Un ressort à genouillère 36 comprenant un fil enroulé sur plusieurs spires jointives se terminant par deux extrémités tangentes, comporte une première extrémité 42 fixée sur l'extrémité droite du bras oscillant 30, un peu en arrière de l'axe transversal T, en un point disposé vers la droite à une distance B de l'axe de réaction 34. La distance B est légèrement supérieure à la distance A.

La deuxième extrémité 44 du ressort à genouillère 36 est fixée au basculeur 24 sur l'axe transversal T, juste à côté de l'extrémité droite du bras oscillant 30.

Lors de l'engagement de la marche arrière présenté figure 3, le doigt de passage 12 se déplaçant suivant une première course C1 vers l'arrière, fait pivoter le basculeur 24 en déplaçant la fourchette de marche arrière 20 suivant une deuxième course C2 vers l'avant, ce qui engage le rapport de marche arrière.

Parallèlement l'axe d'oscillation 32 lié au basculeur 24 se déplace vers l'arrière suivant une cinquième course C5 vers l'arrière. L'axe de réaction fixe 34 étant sensiblement au centre du bras d'oscillation 30, ce bras oscille, et la première extrémité du ressort 44 se déplace vers l'avant suivant une troisième course C3 égale à la cinquième course C5 multipliée par le rapport des distances B/A.

En même temps la deuxième extrémité du ressort 44 fixée au basculeur 24, se déplace vers l'arrière suivant une quatrième course C4. On obtient un déplacement différentiel des deux extrémités 42,44 du ressort 36 par l'addition de la troisième course C3 vers l'avant et de la quatrième course C4 vers l'arrière, qui est assez importante pour successivement rapprocher ces deux extrémités l'une de l'autre puis les éloigner.

Le rapprochement des extrémités du ressort 42, 44 l'une de l'autre entraînant un resserrement des spires de ce ressort 36, on obtient pour le mouvement du bras oscillant 30 un effort successif d'opposition puis d'accompagnement de ce mouvement, qui est transmis au basculeur 24 dans un rapport dépendant des rapports de démultiplication.

Avec un simple ajout du bras oscillant 30 sur le basculeur 24, nécessitant peu de modifications de ce basculeur et de la boîte de vitesses, on obtient par l'inversion du sens de déplacement de la première extrémité du ressort 42 une course différentielle importante des extrémités donnant à ce ressort 36 de manière simple et économique une efficacité élevée.

Le ressort 36 assure à la fois sans utiliser de système de billage, un maintien des positions d'extrémité du basculeur 24, et une aide ergonomique pour l'engagement du rapport de marche arrière lors de sa détente.

## Revendications

1. Boîte de vitesses pour véhicule automobile comprenant une fourchette (20) déplacée par un basculeur (24) pivotant dans une direction entre deux positions d'extrémités pour engager un rapport de cette boîte, et un ressort à genouillère (36) agissant sur ce basculeur (24) qui est successivement comprimé puis détendu en passant d'une position d'extrémité à l'autre, **caractérisée en ce qu'**elle comporte un bras oscillant (30) comprenant des liaisons avec le basculeur (24) et un carter (40) de la boîte de vitesses assurant à ce bras oscillant (30) un pivotement dans la direction opposée à celle du basculeur (24), le ressort (36) étant relié au basculeur (24) et au bras oscillant (30) en deux points décrivant une course (C3, C4) dans des directions opposées.

2. Boîte de vitesses selon la revendication 1, **caractérisée en ce que** le bras oscillant (30) est lié au basculeur (24) et au carter (40) par deux axes parallèles (32, 34).

3. Boîtes de vitesses selon la revendication 2, **caractérisée en ce qu'**elle comporte successivement dans la direction d'un même axe transversal (T), un pivot (26) du basculeur (24), un axe d'oscillation (32) du bras oscillant (30) fixé à ce basculeur (24), et un axe de réaction (34) fixé au carter (40) et ajusté dans un perçage du bras oscillant (30).

4. Boîte de vitesses selon la revendication 3, **caractérisée en ce qu'**elle comporte successivement dans la direction de l'axe transversal (T), une première extrémité du ressort (42) fixée à l'extrémité du bras oscillant (30) opposée à l'axe d'oscillation (32), puis la deuxième extrémité de ce ressort (44).

5. Boîte de vitesses selon l'une quelconque des revendications précédentes, **caractérisée en ce que** le bras oscillant (30) comporte une tôle posée à plat sur le basculeur (24).

6. Boîte de vitesses selon les revendications 3 ou 4, et 5, **caractérisée en ce que** le carter (40) comporte une forme couvrant à la fois le basculeur (24) et le bras oscillant (30), supportant le pivot (26) et l'axe de réaction (34).

7. Boîte de vitesses selon l'une quelconque des revendications précédentes, **caractérisée en ce que** le ressort (36) comporte plusieurs spires jointives, se terminant par des extrémités (42, 44) orientées tangentiellement.

8. Boîte de vitesses selon la revendication 7, **caractérisée en ce que** le déplacement du basculeur (24) entraîne un rapprochement des extrémités du ressort (42, 44) l'une de l'autre puis un écartement de ces extrémités (42, 44).

9. Boîtes de vitesses selon l'une quelconque des revendications précédentes, **caractérisée en ce que** le déplacement du basculeur (24) engage un rapport de marche arrière.

10. Véhicule automobile équipé d'une boîte de vitesses, **caractérisé en ce que** cette boîte de vitesses est selon l'une quelconque des revendications précédentes.
